# EUROPÄISCHE PATENTSCHRIFT

(11) **EP 2 053 258 B1**
(45) Veröffentlichungstag und Bekanntmachung des Hinweises auf die Patenterteilung: **14.03.2018**
(21) Anmeldenummer: 09000749.3
(22) Anmeldetag: 30.08.2001
(51) Int. Cl.: F16D 3/68, F16D 7/04

(54) **Baureihe von Adaptervorrichtungen und Adaptervorrichtung**
Series of adaptor devices and adaptor device
Gamme de dispositifs d'adapteurs et dispositif d'adapteur

(30) Priorität: 13.09.2000 DE 10045501; 17.10.2000 DE 10051434
(43) Veröffentlichungstag der Anmeldung: 29.04.2009
(62) Teilanmeldung aus: 01980304.8
(73) Patentinhaber: SEW-EURODRIVE GmbH & Co. KG, 76646 Bruchsal (DE)
(72) Erfinder: Denefleh, Roland, 64683 Einhausen (DE); Oberländer, Günter, 76706 Kraichtal (DE); Zimmermann, Heinrich, 76646 Bruchsal (DE)
(74) Vertreter: Tüngler, Eberhard

(56) Entgegenhaltungen:
- DE-A1- 19 637 361
- DE-U1- 8 508 805
- US-A- 3 363 435
- US-A- 3 837 179
- US-A- 4 678 452

## Beschreibung

Die Erfindung betrifft eine Baureihe von Adaptervorrichtungen und eine Adaptervorrichtung.

Aus der DE 196 37 361 ist ein Adapter bekannt, der ein gewisses Drehmoment übertragen kann. Bei industriellen Anwendungen sind Antriebe jedoch mit einem immer höheren Drehmoment auszuführen bei möglichst kostengünstiger Ausführung.

Aus der US 4 678 452 A ist eine Kupplung mit Überlastschutz bekannt, wobei ein Zwischenstück zwischen Klauen von Kupplungsteilen vorgesehen ist.

Aus der DE 196 37 361 A ist ein Adaptersystem zum Verbinden von Motoren mit Getrieben bekannt.

Aus der US 4 678 452 A ist eine Überlastungskupplung bekannt.

Aus der US 3 837 179 A ist eine flexible Kupplung bekannt.

Aus der DE 85 08 805 U1 ist eine elastische Klauenkupplung bekannt.

Aus der US 3 363 435 A ist eine dynamoelektrische Maschine bekannt.

Der Erfindung liegt daher die Aufgabe zugrunde, eine Adaptervorrichtung weiterzubilden unter Vermeidung der vorgenannten Nachteile. Insbesondere soll ein höheres Drehmoment übertragbar sein bei gleichzeitiger kostengünstiger Ausführung.

Erfindungsgemäß wird die Aufgabe bei der Adaptervorrichtung nach den in Anspruch 1 angegebenen Merkmalen gelöst.

Wichtige Merkmale der Erfindung bei der Adaptervorrichtung ist, dass zum Verbinden einer eintreibenden Welle, insbesondere Motorwelle eines Motors, insbesondere Elektromotors, mit einer anzutreibenden Einrichtung, insbesondere mit einem Ritzel eines Getriebes, umfassend
- eine Adapterwelle zum drehfesten Verbinden mit der anzutreibenden Einrichtung,
- ein mit der Adapterwelle in Eingriff stehendes Zwischenstück und
- eine mit dem Zwischenstück in Eingriff stehende Subkomponente, die formschlüssig lösbar verbindbar ist mit einer eintreibenden Welle, insbesondere Motorwelle,
wobei die Subkomponente eine Bohrung zur Aufnahme der eintreibenden Welle in der Subkomponente umfasst,
und wobei die Subkomponente mindestens drei Klauen zur Bildung der Kupplung umfasst aufweist,
wobei die Adapterwelle an ihrem zweiten Ende, also dem Zwischenstück zugewandten Ende, mindestens drei Klauen zur Bildung einer Kupplung aufweist,
und wobei das Zwischenstück zwischen den Klauen der Subkomponente und den Klauen der Adapterwelle vorgesehen ist.

Von Vorteil ist dabei, dass die Adapterwelle an sich Klauen aufweisen. Somit ist die Adapterwelle gleichzeitig verwendbar zur drehfesten Verbindung mit einem Ritzel einer anzutreibenden Vorrichtung und an ihrem anderen Ende als Teil einer Klauenkupplung, die durch die Klauen der Adapterwelle selbst, dem Zwischenteil und den Klauen der Subkomponente gebildet wird. Da die Klauen durch Bearbeiten der Urform der Adapterwelle fertigbar sind, ist die räumliche Orientierung, insbesondere der Abstand zur Achse und auch alle weiteren relativ zur Achse der Adapterwelle bezogenen geometrischen Kenngrößen, derart gut fertigbar, dass ein Justieren der Klauen relativ zur Achse der Adapterwelle entfällt und deshalb die Fertigung der Klauen mit der Adapterwelle aus einem Stück zulässig ist. Überraschenderweise hat sich herausgestellt, dass die Toleranzen derart gut eingehalten werden, dass sogar Verbesserungen in der Lebensdauer und weiteren Kenndaten gegenüber einer Adapterwelle mit getrennter Klauenkupplung vorhanden sind.

Wesentlicher weiterer Vorteil ist auch, dass die Subkomponente eine Bohrung zur Aufnahme der eintreibenden Welle in der Subkomponente umfasst, weil damit je nach verschiedener Ausführung oder Norm verschieden lange Motorwellen verbindbar sind.

Weiter ist von Vorteil, dass das Zwischenstück zwischen den Klauen der Adapterwelle und der Subkomponente vorgesehen ist und daher bei Versagen des Zwischenstücks die Klauen direkt eine Kupplung bilden, wobei ein entsprechend großes Spiel entsteht. Die Sicherheit ist somit auch bei Ausfall extrem hoch. Insbesondere entsteht bei dem beschriebenen Versagen wegen des großen Spiels ein Geräusch beim Betrieb, das dem Bediener als Warnhinweis deutlich übermittelbar ist.

Durch die Integration der Klauen in die Adapterwelle und die Subkomponente entfallen viele beim Stand der Technik vorhandenen Komponenten. Weiter vorteilhaft ist, dass mittels des Zwischenstücks subkomponentenseitig eine Schnittstelle geschaffen ist, die es erlaubt, verschiedene Subkomponenten anzuschließen. Diese Subkomponenten müssen nur dieselben Klauen aufweisen. Daher sind verschiedene Subkomponenten verwendbar für die Baureihe. Deshalb erhöht sich die Mannigfaltigkeit der anbietbaren Funktionalitäten erheblich bei gleichzeitiger Reduzierung des Fertigungsaufwandes gegenüber dem Stand der Technik. Beispielsweise ist der Wunsch des Kunden erfüllbar, zwischen Motor und Getriebe nur die Funktionalität einer Klauenkupplung vorzusehen oder alternativ die Funktionalität einer Überlastkupplung zusätzlich zur Funktionalität einer Klauenkupplung vorzusehen.
Dabei ist ein wesentlicher Vorteil der Klauenkupplung, geometrische Abweichungen auszugleichen. Die Überlastkupplung hat als wesentlichen Vorteil bei Überlastung ein gewünschtes Verhalten aufzuweisen. Somit sind beide Vorteile in der Erfindung kombinierbar, wobei gleichzeitig Teile oder Komponenten gegenüber dem Stand der Technik entfallen, insbesondere ist die Verbindung mit der Subkomponente besonderes einfach und schnell ausführbar und gleichzeitig ohne weitere Teile, die dem Ausgleichen der geometrischen Lage zwischen einer Klauenkupplung und einer Überlastkupplung beim Stand der Technik dienen würden.

Von Vorteil ist bei einer bevorzugten Ausführung, dass das Zwischenstück weicher auswählbar ist und somit eine einer großen Elastizität entsprechende Drehsteifigkeitskennlinie oder Übertragungsfunktion aufweist. Außerdem sind die Klauen über die Radialteile des Zwischenstücks voneinander isoliert. Die Kupplung dämpft also zu übertragende Drehmomentschwankungen ab. Wie schon oben angedeutet, ist die durch die Adaptervorrichtung geschaffene Kupplung durchschlagsicher. Wenn nämlich das Zwischenstück verschleißt oder bei zu hoher thermischer Belastung derart belastet wird, dass es abgenutzt wird, treffen schließlich die Klauen aufeinander. Die Grundfunktion der Adaptervorrichtung bleibt also erhalten. In einem solchen Notfall oder Unfall erzeugen dann metallische ausgeführte Klauen mittels des Aufeinanderschlagens, insbesondere bei Drehmomentschwankungen, vorteiligerweise ein Geräusch, das den Bediener oder eine Überwachungseinrichtung auf den Verschleiß und damit den Notfall aufmerksam macht.

Weitere Vorteile sind, dass die Motorwelle durch das Zwischenstück bis in die Adapterwelle hineinragen darf und somit die gesamte Adaptervorrichtung sehr kompakt ausführbar ist. Außerdem weist die Adapterwelle Klauen auf. Somit ist vorteilhafterweise die Integration einer Kupplungsfunktion in eine Welle, also die Adapterwelle, ausgeführt. Hierdurch ist eine besonders kompakte Ausführung erreicht, die weniger Übergänge und/oder Verbindungen aufweist und eine Verwendung einer separaten Kupplung erübrigt. Dies ist ein entscheidender Vorteil, wenn die Erfindung innerhalb einer Baureihe von Getrieben und Motoren verwendet wird. Die Adaptervorrichtung ist somit vorteiligerweise optimierbar für die zu übertragende Leistung und die in der Baureihe von Getrieben und Motoren verwendeten Baugrößen und Bohrungs- und/oder Wellen-Dimensionierungen.

Da die Adapterwelle und das Kupplungsteil mit ihren jeweiligen Klauen metallisch ausführbar sind und die Anzahl der Klauen drei oder mehr ist, sind große Drehmomente übertragbar. Insbesondere ist die Anzahl der Klauen vorteiligerweise derart optimierbar, dass möglichst alle Materialteile möglichst viel Kraft und/oder Drehmoment übertragen. Darüber hinaus sind keine wesentlichen Materialbereiche vorhanden, die ungenutzt sind.

Beim Zwischenstück sind bei einer bevorzugten Ausführung Radialteile vom Grundkörper ausgehend jeweils in radialer Richtung angeordnet. Der Grundkörper des Zwischenteils weist eine Bohrung auf und der Durchmesser dieser Bohrung ist größer als der Durchmesser der eintreibenden Welle, insbesondere Motorwelle. Die Radialteile des Zwischenteils sind zwischen den Klauen der Adapterwelle und den Klauen des Kupplungsteils angeordnet und in radialer Richtung ballig ausgeführt. Die Radialteile weisen in radialer Richtung jeweils einen derartigen Dickenverlauf auf und die Klauen oder deren Flanken sind radial derart in Umfangsrichtung gekrümmt und /oder geformt, dass die Radialteile bei Nennbelastung den Grundkörper des Zwischenteils in radialer Richtung auf Druck belasten. Die Radialteile weisen Abstandshalter in axialer Richtung zur Adapterwelle und zum Kupplungsteil auf. Die Radialteile sind vom Grundkörper ausgehend jeweils in radialer Richtung angeordnet. Durch die spezielle Ausformung der Radialteile und durch die Ausformung der Klauen wird bei Belastung das Material der Radialteile in Richtung auf den Grundkörper gedrückt, so dass ein Druck in radialer Richtung auf denselben ausübbar wird. Somit wird vorteilhafterweise kein Material nach außen gequetscht, wodurch ein schnellerer Verschleiß des Zwischenstücks bewirkt wäre.

Die Drehsteifigkeitskennlinie oder Übertragungsfunktion der Adaptervorrichtung ist durch die speziell wählbare Ausführung der Radialteile ebenfalls veränderbar.

Die Integration der Abstandshalter zum Einhalten axialer Abstände in das Zwischenstück ist vorteiligerweise äußerst kostengünstig und führt zu einem noch kompakteren Aufbau.

Insbesondere die sternförmige Ausführung des Zwischenstücks und die beschriebene kompakte Bauart spielen derart zusammen, dass eine insgesamt äußerst kompakte Kupplungsfunktion bei gleichzeitigem äußerst hohen übertragbaren Drehmoment geschaffen ist. Die Adapaterwelle ist mit ihren Klauen aus einem Stück gefertigt und die Subkomponente ist mit ihren Klauen aus einem Stück gefertigt oder die Subkomponente umfasst ein Mitnehmerteil, das die Klauen aufweist und aus einem Stück mit diesen Klauen gefertigt ist. Bei einer bevorzugten Ausführung bilden die Klauen der Subkomponente und die Klauen der Adapterwelle nach Versagen des Zwischenstücks, insbesondere durch chemisch oder mechanisch bedingten Ausfall, eine spielbehaftete formschlüssige Verbindung. Die Adaptervorrichtung weist also eine erhöhte Sicherheit auf. Zum formschlüssigen Verbinden mit einer eintreibenden Welle ist die Subkomponente eine mit dem Zwischenstück in Eingriff stehende **Überlastkupplung**, die formschlüssig lösbar verbindbar ist mit der eintreibenden Welle, insbesondere mittels einer Passfederverbindung. Vorteilhaft ist dabei, dass je nach Anwendung verschiedenste Funktionalitäten anbietbar sind bei gleichzeitiger Rationalisierbarkeit der Fertigung, Verringerung der Lagerkosten und sehr kompakter Ausführart.

Bei einer bevorzugten Ausführung weist die Adapterwelle an ihrem vom Zwischenstück abgewandten Endbereich eine Passfedernut auf zur Verbindung mit einem Ritzel eines Getriebes als anzutreibende Vorrichtung.

Bei einer bevorzugten Ausführung umfasst das Zwischenstück einen Grundkörper und mindestens sechs, sternförmig angeordnete Radialteile auf. Von Vorteil ist dabei, dass die Radialteile zusammen und gleichzeitig einfach und schnell montierbar sind, weil der Grundkörper sie verbindet. Außerdem ist die Anzahl der Radialteile mindestens sechs, wodurch ein optimaler Wert für Flächenpressung erreichbar wird.

Bei einer bevorzugten Ausführung weist die Subkomponente zur Aufnahme der eintreibenden Welle eine Bohrung auf und ist mit einer Passfederverbindung mit der eintreibenden Welle verbindbar. Dies ist eine lösbare Verbindungstechnik und ermöglicht somit eine schnelle und einfache Montage, Wartung oder Austausch von Komponenten.

Bei einer bevorzugten Ausführung die Adapterwelle eine Bohrung derart auf und der Durchmesser dieser Bohrung derart größer ist als der Durchmesser der eintreibenden Welle, dass das adapterwellenseitige Ende der eintreibenden Welle in die Adapterwelle einführbar ist und/oder ohne Eingriff mit der Adapterwelle in die Adapterwelle hineinragbar vorsehbar ist. Somit sind je nach Norm verschiedene Längen der Motorwelle verwendbar.

Wichtige Merkmale der Erfindung bei der Baureihe von Adaptervorrichtungen sind, dass wobei die Baureihe mindestens eine Baugröße umfasst und jede Baugröße mindestens eine Variante umfasst, und wobei jede Adaptervorrichtung jeweils mindestens
- eine Adapterwelle 1 zum Verbinden mit einer anzutreibenden Vorrichtung
- ein mit der Adapterwelle 1 im Eingriff stehendes Zwischenstück 2 und
- eine mit dem Zwischenstück 2 im Eingriff stehende Subkomponente zum Verbinden mit einer eintreibenden Welle, insbesondere Motorwelle,
umfasst,
und wobei jede Variante mindestens durch
- einen Durchmesser A_i einer Bohrung zur Aufnahme der eintreibenden Welle in der Subkomponente,
- ein Zwischenstück 2 und
- an dem dem Zwischenstück 2 abgewandten Ende der Adapterwelle 1 einen Durchmesser D_i
gekennzeichnet ist, wobei i ein Nummerierungsindex ist,
und wobei die Durchmesser A_i der Bohrungen zur Aufnahme der eintreibenden Welle in der Subkomponente von einer Normmotoren-Stufung umfasst sind,
und wobei bei der Baureihe die Durchmesser D_i mit zunehmender charakteristischer Leistung mindestens nicht kleiner werden,
und wobei jedes in der Baureihe verwendete Zwischenstück 2 Radialteile 6 aufweist, die derart ausgelegt sind, dass sie bei der größten, für das jeweilige Zwischenstück vorgesehenen Leistung und/oder charakteristischen Leistung jeweils einem innerhalb eines einzigen für die gesamte Baureihe bestimmten Toleranzbereiches liegenden Wert von Flächenpressung ausgesetzt sind,
und wobei mindestens ein Zwischenstück 2 in Varianten mindestens zweier verschiedener Baugrößen verwendet wird
und/oder
mindestens ein Zwischenstück 2 bei Subkomponenten mit verschiedenem Durchmesser A_i der Bohrung zur Aufnahme der eintreibenden Welle und bei Adapterwellen mit verschiedenen Durchmessern D_i im Bereich der Passfedernut 11 der Adapterwelle 1 verwendet wird.

Insbesondere ist bei jeder Variante die charakteristische Leistung die Nennleistung oder die jeweils zu übertragende Leistung oder die maximal übertragbare Leistung.
Wesentlicher Vorteil ist, dass zur Lösung der Aufgabe der Erfindung eine Baureihe mit besonderen Merkmalen gebildet wird. Diese Merkmale haben unter anderem den Vorteil der mehrfachen Verwendbarkeit innerhalb der Baureihe, also auch Verringerung der Lagerkosten, und der gleichartigen Bearbeitung von Teilen, also einer einfacheren und schnelleren Produktion.

Weiter ist von Vorteil, dass der Werkstoff des Zwischenstücks bis zu seiner Grenze belastbar ist und trotzdem mehrfach verwendbar ist innerhalb der Baureihe. Somit ist die Adaptervorrichtung jeweils mit sehr kleinem Volumen ausführbar und die Lagerkosten sind klein gehalten und trotzdem ist eine große Variantenvielfalt ermöglicht. Außerdem wird ein Zwischenstück bei Kupplungsteilen mit jeweils verschiedenem Durchmesser A_i der Bohrung zur Aufnahme der Motorwelle und bei Adapterwellen mit verschiedenen Durchmessern D_i im Bereich der Passfedernut der Adapterwelle verwendet. Dies bedeutet, dass nicht nur die übliche, vom Hersteller angebotene Baureihe, die in ihrer Matrix, also dem zweidimensionalen aus allen Zweier-Tupeln gebildeten Zahlenschema, keine gefüllten 2*2 Untermatrizen aufweist, sondern auch zusätzliche Sonderkonstruktionen von der Baureihe erfasst sind. Dies drückt sich in tabellarischer Darstellung in gefüllten 2*2 Untermatrizen aus.

Somit wird also eine neue, nach dem Stand der Technik unbekannte Baureihe eingesetzt, die aber besondere Kostenvorteile und Kundenfreundlichkeit ohne zusätzliche Mehrkosten aufweist.

Dass die Adaptervorrichtungen zum Motor hin Durchmesser einer Normmotoren-Stufung aufweisen, ist kundenfreundlich und vermindert die Notwendigkeit von Sonderkonstruktionen für besondere Durchmesser des Motorzapfens.

Bei einer weiteren vorteilhaften Ausgestaltung ist die Flächenpressung in der Mitte der Nocken bestimmt und die Anzahl der jeweils belasteten Radialteile berücksichtigt. Von Vorteil ist dabei, dass ein Näherungswert der physikalischen Flächenpressung in einfacher Weise berechenbar ist.

Bei einer weiteren vorteilhaften Ausgestaltung ist die Anzahl der jeweils belasteten Radialteile 3 oder 4 ist, wobei die Gesamtzahl der Radialteile 6 oder 8. Von Vorteil ist dabei, dass die Radialteile nicht zu dünn sind, also eine hohe Stabilität aufweisen und bei Belastung immer mindestens 3 Radialteile belastet werden.

Bei einer weiteren vorteilhaften Ausgestaltung umfasst der Toleranzbereich Werte von 2 N/mm^2 bis 3,2 N/mm^2. Von Vorteil ist dabei, dass der Werkstoff Polyurethan für das Zwischenstück einsetzbar ist.

Bei einer weiteren vorteilhaften Ausgestaltung ist die Normmotoren-Reihe eine IEC-Normmotoren-Stufung oder eine Nema-Normmotoren-Stufung. Von Vorteil ist dabei, dass marktübliche Motor-Baureihen nach internationaler oder US-amerikanischer Norm verwendbar sind.

Bei einer weiteren vorteilhaften Ausgestaltung ist die Baureihe von einer größeren Baureihe umfasst. Von Vorteil ist dabei, dass bei sehr großen oder sehr kleinen zu übertragenden Leistungen auch andere Adaptervorrichtungen mit beispielsweise anderen Flächenpressungen einsetzbar sind oder die erfindungsgemäße Baureihe in einer Baureihe enthalten ist, die auch noch Zwischenwerte für die Durchmesser D_i und A_i aufweist und somit dem Kunden eine noch größere Auswahl bietet.

Bei einer weiteren vorteilhaften Ausgestaltung umfasst die Adaptervorrichtung bei der Baureihe
eine Adapterwelle, die an ihrem ersten Ende drehfest verbindbar mit einem Ritzel ist und an ihrem zweiten Ende mindestens drei Klauen zur Bildung einer Kupplung aufweist. Wesentlicher Vorteil ist dabei, dass die Adapterwelle als ein Teil ausgeführt ist und somit Teile einsparbar sind und die Baureihe besonders kostengünstig ausführbar ist.

Weitere vorteilhafte Ausgestaltungen ergeben sich aus den Unteransprüchen.

Die Erfindung wird nun anhand von Abbildungen näher erläutert:

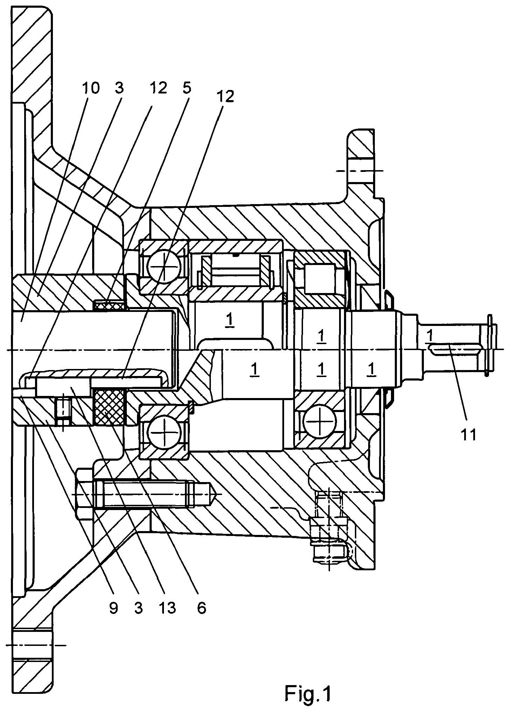

In der Figur 1 ist Halbschnitt gezeigt, der in der oberen Hälfte eine Ausführung mit Rücklaufsperre und in der unteren Hälfte eine einfache Ausführung zeigt.

Dabei ist die Motorwelle 10 über eine Passfeder 13, die in der Passfedernut 9 des Kupplungsteils 3 und in der Passfedernut 12 der Motorwelle eingebracht ist und eine Verbindung zur Drehmomentübertragung darstellt. Zwischen dem Kupplungsteil 3 und der Adapterwelle 1 ist das Zwischenstück 2 mit Grundkörper 5 und Radialteilen 6 angeordnet.

Die Adapterwelle 1 weist eine Passfedernut 11 auf zur Verbindung mit einem Ritzel eines Getriebes als anzutreibende Vorrichtung.

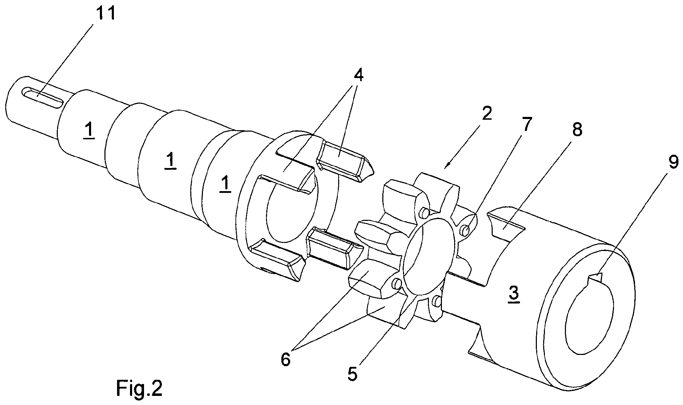

In der Figur 2 ist eine Explosionszeichnung der erfindungsgemäßen Adaptervorrichtung gezeigt.
Die Adapterwelle 1 weist wiederum eine Passfedernut 11 zur Verbindung mit einem Ritzel eines Getriebes an ihrem ersten Ende auf. Außerdem sind an ihrem zweiten Ende Klauen 4 integriert, die in radialer Richtung Flanken aufweisen, die gekrümmt sind. Das Zwischenstück 2 weist Grundkörper 5, Radialteil 6 und Abstandshalter 7 auf. Es liegt mit seinen Radialteilen 6 zwischen den Klauen der Adapterwelle 1 und den Klauen 8 des Kupplungsteils 3, das eine Passfedernut 9 zur Aufnahme der Passfeder 13 umfasst.

Die Krümmung der Flanken der Klauen 4, 8 ist derart ausgeführt und die Radialteile sind derart ballig ausgeführt, dass bei Belastung, insbesondere Nennlast oder Überlast, das weiche Material der Radialteile 6 des Zwischenstücks 2 nicht radial nach außen sondern radial nach innen zur Achse hin gedrückt wird. Somit üben die Radialteile 6 dann eine Kraft oder einen Druck in radialer Richtung auf den Grundkörper 5 aus. Auf diese Weise wird der Verschleiß des Zwischenstückes reduziert. Die Abstandshalter 7 halten Adapterwelle 1 und Kupplungsteil 3 auseinander.

Die Radialteile 6 sind in axialer, radialer und Umfangsrichtung ballig geformt, um in Zusammenspiel mit der balligen Form der Flanken der Klauen 4,8 in radialer Richtung und in Richtung des Umfangs die genannte radial gerichtete Kraft auf den Grundkörper auszuüben. Nach einem Verschleiß des Zwischenteils 2, beispielsweise in einem Notfall, ist kein Durchdrehen der Kupplung ermöglicht, da die Klauen 4, 8 die Sicherheit gegen Durchschlagen garantieren.

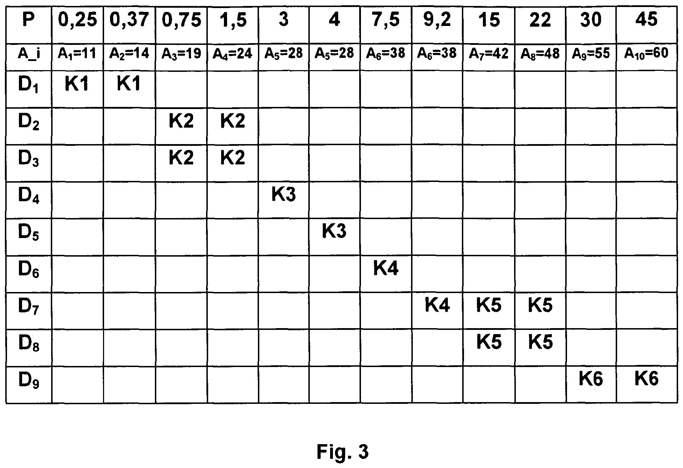

Figur 3 zeigt ein erfindungsgemäßes Ausführungsbeispiel für eine IEC-Stufung. In der ersten Zeile ist die Motorleistung P der Baureihe eingetragen, darunter die zugehörigen Durchmesser A_i der Bohrungen des Kupplungsteils 3 aus der IEC-Norm- Stufung, die den Außendurchmessern der Motorzapfen zugeordnet sind. Der Index i läuft dabei von 1 bis 10.

In der linken Spalte sind die Durchmesser D_i der Ritzelzapfen, also die Durchmesser D_i der Adapterwelle 1 zum Verbinden mit einem Ritzel im Bereich der Passfedernut 11 der Adapterwelle 1, eingetragen. Sie gehören zu der herstellereigenen Stufung des Getriebeherstellers. Der Index i läuft dabei von 1 bis 9. Mit aufsteigendem Index nimmt der Wert des Durchmessers D_i zu. Jeder Wert D_i ist kleiner als der entsprechende Wert A_i mit gleichem Index i; also ist immer D₁ < A₁, D₂ < A₂, und so weiter. Die Durchmesser D_i und die jeweils zu übertragenden Leistung sind also derart abgestimmt, dass eine, gegebenenfalls leicht überdimensionierte Normmotoren-Stufung der Durchmesser A_i verwendbar ist und gleichzeitig die Adaptervorrichtung möglichst optimal, insbesondere klein, ausgeführt ist.

In der Matrix sind die Zwischenteile K1, K2, K3, K4, K5, K6 bei den jeweiligen Motorzapfen und Ritzelzapfen eingetragen. Sie sind derart ausgelegt, dass die Radialteile 6 bei Belastung einer ungefähr gleichen Flächenpressung bei der größten zu übertragenden Leistung ausgesetzt sind. Der Wert der Flächenpressung liegt in einem Toleranzbereich um 2,7 N/mm^2 herum, und umfasst im Wesentlichen Werte von 2,6 bis 2,8 N/mm^2. Bei kleinen oder großen Leistungen können auch Werte wie 3,2 oder 2,3 N/mm^2 auftreten. Im Wesentlichen ist somit ein spezielles Polyurethan verwendbar und sehr gut oder maximal auslastbar.

Die Zwischenteile K2 und K5 füllen 2*2 Untermatrizen aus. Dies bedeutet, dass in der Baureihe diese Zwischenstücke bei verschiedenen Durchmessern A_i und D_i einsetzbar sind und somit nicht nur die Standard-Baureihe vom Hersteller angeboten werden kann sondern auch Sonderkonstruktionen innerhalb der erfindungsgemäßen Baureihe ohne zusätzlichen Aufwand oder zusätzliche Kosten ausführbar sind. Die Zwischenteile sind also mehrfach innerhalb der Baureihe verwendbar.

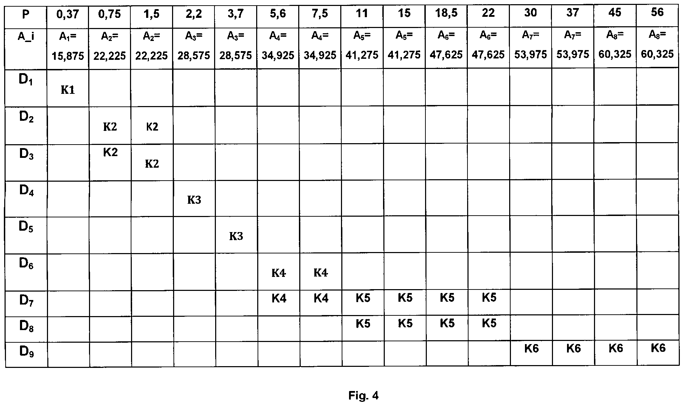

Figur 4 zeigt ein erfindungsgemäßes Ausführungsbeispiel für eine NEMA-Stufung der Durchmesser A_i, wobei die Durchmesser A_i wiederum in mm angegeben sind. Die Baureihe nach Figur 4 zeigt ebenfalls Mehrfachverwendung mit den genannten Vorteilen.

Wesentlicher weiterer Vorteil der Erfindung ist, dass bei der Baureihe nach Figur 4 mit NEMA-Stufung und bei der Baureihe nach Figur 3 mit IEC-Stufung der Durchmesser A_i dieselben Zwischenteile K1 bis K6 verwendbar sind.

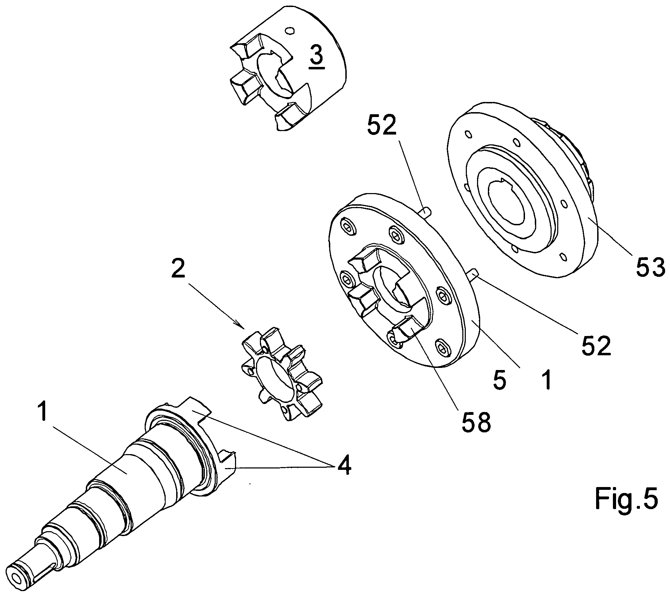

In der Figur 5 ist wiederum das erfindungsgemäße Ausführungsbeispiel gemäß Figur 2, umfassend die Komponenten Adapterwelle 1, Zwischenstück 2, Kupplungsteil 3, gezeigt. Allerdings ist das Kupplungsteil 3 bei Seite geschoben. Außerdem ist ein Mitnehmerteil 51 und ein anderes Kupplungsteil 53 gezeigt. Das Mitnehmerteil 51 weist Klauen 58 auf, die den Klauen 8 des Kupplungsteils 3 gleichen und ist mittels Schrauben 52 mit dem anderen Kupplungsteil 53 verbindbar. Das Mitnehmerteil 51 und das andere Kupplungsteil 53 bilden zusammen eine Kupplung.

In verschiedenen erfindungsgemäßen Ausführungsbeispielen ist die Kupplung nach verschiedenen Wirkprinzipien ausgeführt. Äußerst vorteilhaft ist, die Kupplung nach der Art der sogenannten Überlastkupplung auszuführen.

Dadurch wird das Zwischenstück 2 ebenso geschont wie die Klauen 4 der Adapterwelle und die Klauen 8 des Kupplungsteils 3. Selbstverständlich wird auch die ein- und abtreibende Vorrichtung geschützt. Das Übertragungsverhalten einer Überlastkupplung ist immer derart, dass bei unzulässig hoher Belastung das Übertragungsverhalten nicht mehr dem Übertragungsverhalten bei Nennlast entspricht und somit die ein- und abtreibenden Vorrichtungen geschützt werden. Solche Überlastkupplungen sind allgemein bekannt und werden in den verschiedensten Weise ausgeführt. Sie sind nach ihren Wirkprinzipien klassifizierbar. Es gibt dabei selbsttätig schaltende, oder nicht selbsttätig schaltende. Weiter sind die Überlastkupplungen nach lasttrennendem oder lasthaltendem Übertragungsverhalten klassifizierbar. Weitere Klassifizierungsmerkmale sind reibschlüssiges, formschlüssige oder stoffschlüssiges Verhalten.

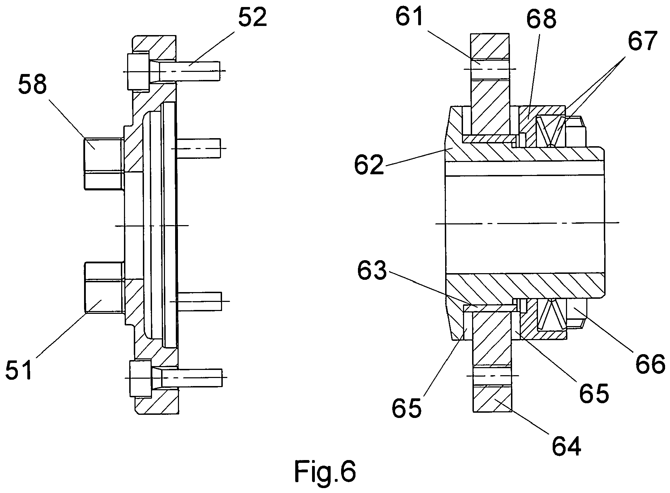

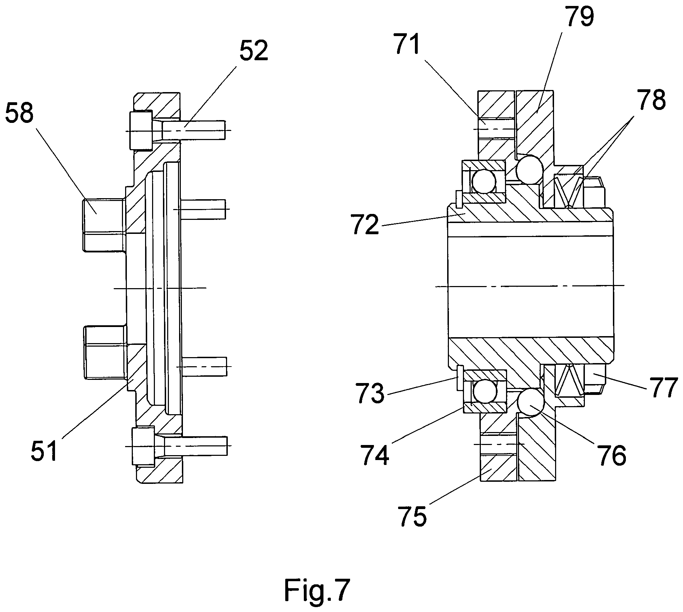

Als konkrete erfindungsgemäße Ausführungsbeispiele werden gemäß den Figuren 6 und 7 eine Ausrückkupplung und eine Rutschkupplung schematisch skizziert. Jedoch sind in Erweiterung des für den Fachmann erfinderischen Prinzips, insbesondere der Integration der Klauen in das Mitnehmerteil einer Kupplung, die bis auf die Forderung des Umfassens mindestens eines Mitnehmerteils beliebig ist, verschiedene weitere Kupplungen vorteilhaft verwendbar.

In der Figur 6 ist eine Rutschkupplung schematisch skizziert. Die eintriebsseitige Welle, insbesondere eine von einem Elektromotor angetriebene, ist mittels Passfederverbindung mit der Kupplungsnabe 62 verbunden. Um die Gleitbuchse 63 ist die Bremsscheibe 64 angeordnet, die Gewindebohrungen 61 aufweist und mittels der Schrauben 52, die mit diesen Gewindebohrungen 61 lösbar verbindbar sind, mit dem Klauen 58 umfassenden Mitnehmerteil 51 verbindbar ist.

Mittels der Klauen 58 steht die Rutschkupplung mit dem Zwischenstück 2 in Eingriff in entsprechender Weise wie das Kupplungsteil 3 mit seinen Klauen.

Die Nutmutter 66 ist auf die Kupplungsnabe 62 aufgeschraubt und übt über die Tellerfedern 67 Kraft auf den Druckring 68 auf. Der Druckring 68 bewirkt somit ein Anpressen der Bremsbeläge 65 an die Bremsscheibe 64. Erst bei Überschreiten eines kritischen Wertes an übertragenem Drehmoment rutscht die Bremsscheibe 64 durch. Somit liegt ein Schutz der ein- und abtreibenden Vorrichtung und der Adaptervorrichtung selbst vor.

Die Figur 6 zeigt nur schematisch das Wirkprinzip der Rutschkupplung. Der Fachmann ist somit in der Lage mittels seines Fachwissens weitere Komponenten zur Verfeinerung der Rutschkupplung hinzuzufügen.

In der Figur 7 ist eine Ausrückkupplung schematisch skizziert. Die eintriebsseitige Welle, insbesondere eine von einem Elektromotor angetriebene, ist mittels Passfederverbindung mit der Kupplungsnabe 72 verbunden. Um die Kupplungsnabe 72 ist über ein Lager 74 der Kalottenring 75 angeordnet, in dem die Kugeln 76 liegen, solange noch kein kritischer Wert an Drehmoment übertragen wird. Der Druckring 79 wird dabei von den Tellerfedern 78, die sich an der Nutmutter 77 abstützen, auf die Kugeln 76 gedrückt. Der Sicherungsring 73 stellt eine axiale Begrenzung für das Lager 74 dar.

Mittels der Schrauben 52, die mit den Gewindebohrungen 71 des Kalottenrings 75 lösbar verbindbar sind, ist das Klauen 58 umfassende Mitnehmerteil 51 verbindbar.

Mittels der Klauen 58 steht die Ausrückkupplung mit dem Zwischenstück 2 in Eingriff in entsprechender Weise wie das Kupplungsteil 3 mit seinen Klauen.

Die Figur 7 zeigt nur schematisch das Wirkprinzip der Ausrückkupplung. Der Fachmann ist somit in der Lage mittels seines Fachwissens weitere Komponenten zur Verfeinerung der Ausrückkupplung hinzuzufügen.

In der Figur 5 ist also die schon beschriebene Baureihe von Adaptervorrichtungen derart in ihrer Vielfalt erweitert, dass je nach Kundenwunsch oder anderer Anforderung eintriebseitig das Kupplungsteil 3 durch verschiedene Mitnehmerteile 51 zusammen mit anderen Kupplungsteilen 53 anbaubar sind. Die mit dem Zwischenstück 2 in Eingriff stehenden Klauen gleichen den Klauen des Kupplungsteiles 3 und sind beim Mitnehmerteil 51 integriert, insbesondere in einem Bearbeitungsgang aus einem Werkstück herausgearbeitet.

Wenn also eintriebsseitig keine Passfeder erwünscht ist, ist eine Überlastkupplung eines auswählbaren Wirkprinzips vorsehbar.

Bei weiteren erfindungsgemäßen Ausführungsbeispielen ist bei der Überlastkupplung ein Sensor anmontiert, der im Überlastungsfall ein Ereignis detektiert. Bei der Ausrückkupplung ist dafür beispielsweise ein induktiver Sensor vorteilhaft, der den relativen Abstand von Kugelkalotte 75 und Druckring 79 detektiert. Statt induktiven Sensoren sind auch andere Sensoren verwendbar, die entsprechend lineare Abstände detektieren können.

Bei der Rutschkupplung sind analog Sensoren vorteilhaft, die die relative Bewegung von Bremsscheibe gegen Bremsbeläge 65, Kupplungsnabe 62 oder Nutmutter 66 detektieren.

Bei der Ausrückkupplung ist auch ein elektrischer Kontakt zwischen Druckring 79 und Kalottenring 75 überwachbar.

In den genannten Fällen liefert der Sensor oder das Überwachen des elektrischen Kontaktes eine Information über den Überlastungsfall. Diese Information wird weitergeleitet, akustisch hörbar gemacht oder optisch angezeigt.

Insbesondere ist sogar der gesamte Antrieb im Überlastfall abschaltbar oder das vom Elektromotor Drehmoment bewirkte Drehmoment reduzierbar.

### Bezugszeichenliste

- 1: Adapterwelle
- 2: Zwischenstück
- 3: Kupplungsteil
- 4: Klauen der Adapterwelle
- 5: Grundkörper
- 6: Radialteil
- 7: Abstandshalter
- 8: Klauen des Kupplungsteils
- 9: Passfedernut des Kupplungsteils
- 10: Motorwelle
- 11: Passfedernut der Adapterwelle
- 12: Passfedernut der Motorwelle
- 13: Passfeder
- 51: Mitnehmerteil
- 52: Schrauben
- 53: anderes Kupplungsteil
- 58: Klauen
- 61: Gewindebohrung
- 62: Kupplungsnabe
- 63: Gleitbuchse
- 64: Bremsscheibe
- 65: Bremsbeläge
- 66: Nutmutter
- 67: Tellerfeder
- 68: Druckring
- 71: Gewindebohrung
- 72: Kupplungsnabe
- 73: Sicherungsring
- 74: Lager
- 75: Kalottenring
- 76: Kugel
- 77: Nutmutter
- 78: Tellerfedern
- 79: Druckring

## Patentansprüche

1. Adaptervorrichtung zum Verbinden einer eintreibenden Welle, insbesondere Motorwelle eines Motors, insbesondere Elektromotors, mit einer anzutreibenden Einrichtung, insbesondere mit einem Ritzel eines Getriebes, umfassend
- eine Adapterwelle (1) zum drehfesten Verbinden mit der anzutreibenden Einrichtung,
- ein mit der Adapterwelle (1) in Eingriff stehendes Zwischenstück (2) und
- eine mit dem Zwischenstück (2) in Eingriff stehende Subkomponente, die formschlüssig lösbar verbindbar ist mit einer eintreibenden Welle, insbesondere Motorwelle,
wobei die Subkomponente eine Bohrung zur Aufnahme der eintreibenden Welle in der Subkomponente umfasst,
und wobei die Subkomponente mindestens drei Klauen zur Bildung der Kupplung aufweist,
wobei die Adapterwelle (1) an ihrem zweiten Ende, also dem Zwischenstück (2) zugewandten Ende, mindestens drei Klauen zur Bildung einer Kupplung aufweist,
und wobei das Zwischenstück (2) zwischen den Klauen der Subkomponente und den Klauen der Adapterwelle vorgesehen ist, wobei das Zwischenstück (2) einen Grundkörper (5) und mindestens sechs, sternförmig angeordnete Radialteile (6) aufweist,
wobei beim Verbinden einer eintreibenden Welle die Adapterwelle (1) eine Bohrung derart aufweist und der Durchmesser dieser Bohrung derart größer ist als der Durchmesser der eintreibenden Welle, dass das adapterwellenseitige Ende der eintreibenden Welle in die Adapterwelle (1) eingeführt ist und ohne Eingriff mit der Adapterwelle (1) in die Adapterwelle (1) hineinragt,
wobei der Grundkörper (5) des Zwischenteils eine Bohrung aufweist und der Durchmesser dieser Bohrung größer ist als der Durchmesser der Eintreibenden Welle,
wobei die Adapaterwelle (1) mit ihren Klauen aus einem Stück gefertigt ist
und die Subkomponente ein Mitnehmerteil umfasst, das die Klauen aufweist und aus einem Stück mit diesen Klauen gefertigt **dadurch gekennzeichnet, dass** die Radialteile (6) in radialer Richtung ballig ausgeführt sind,
wobei zum formschlüssigen Verbinden mit einer eintreibenden Welle die Subkomponente eine mit dem Zwischenstück (2) in Eingriff stehende Überlastkupplung, die formschlüssig lösbar verbunden ist mit der eintreibenden Welle, insbesondere mittels Passfederverbindung, ist.

2. Adaptervorrichtung nach Anspruch 1,
**dadurch gekennzeichnet, dass**
die Klauen der Subkomponente und die Klauen der Adapterwelle (1) nach Versagen des Zwischenstücks (2), insbesondere durch chemisch oder mechanisch bedingten Ausfall, eine spielbehaftete formschlüssige Verbindung bilden.

3. Adaptervorrichtung nach mindestens einem der vorangegangenen Ansprüche,
**dadurch gekennzeichnet, dass**
die Subkomponente zur Bildung verschiedener Varianten einer Baureihe verschieden ausführbar ist, wobei zum formschlüssigen Verbinden mit einer eintreibenden Welle als Subkomponente
- entweder ein mit dem Zwischenstück (2) in Eingriff stehendes Kupplungsteil 3, das formschlüssig lösbar verbindbar ist mit der eintreibenden Welle, insbesondere mittels Passfederverbindung,
- oder eine mit dem Zwischenstück (2) in Eingriff stehende Überlastkupplung, die formschlüssig lösbar verbindbar ist mit der eintreibenden Welle, insbesondere mittels Passfederverbindung,
vorsehbar ist.

4. Adaptervorrichtung nach mindestens einem der vorangegangenen Ansprüche,
**dadurch gekennzeichnet, dass**
weist das Zwischenstück (2) einen Grundkörper (5) und mindestens sechs, sternförmig angeordnete Radialteile (6) auf.

5. Adaptervorrichtung nach mindestens einem der vorangegangenen Ansprüche,
**dadurch gekennzeichnet, dass**
die Subkomponente zur Aufnahme der eintreibenden Welle eine Bohrung aufweist und mit einer Passfederverbindung mit der eintreibenden Welle verbindbar ist,

6. Adaptervorrichtung nach mindestens einem der vorangegangenen Ansprüche,
**dadurch gekennzeichnet, dass**
die Radialteile (6) vom Grundkörper (5) ausgehend jeweils in radialer Richtung angeordnet sind,

7. Adaptervorrichtung nach mindestens einem der vorangegangenen Ansprüche,
**dadurch gekennzeichnet, dass**
die Radialteile (6) des Zwischenteils zwischen den Klauen der Adapterwelle (1) und den Klauen des Kupplungsteils angeordnet sind,

8. Adaptervorrichtung nach mindestens einem der vorangegangenen Ansprüche,
**dadurch gekennzeichnet, dass**
die Radialteile (6) in radialer Richtung jeweils einen derartigen Dickenverlauf aufweisen und die Klauen oder deren Flanken radial derart in Umfangsrichtung gekrümmt und /oder geformt sind, dass die Radialteile (6) bei Nennbelastung den Grundkörper (5) des Zwischenteils in radialer Richtung auf Druck belasten.

9. Adaptervorrichtung nach mindestens einem der vorangegangenen Ansprüche,
**dadurch gekennzeichnet, dass**
die Radialteile (6) Abstandshalter (7) in axialer Richtung zur Adapterwelle (1) und zum Kupplungsteil (3)aufweisen,

10. Adaptervorrichtung nach mindestens einem der vorangegangenen Ansprüche,
**dadurch gekennzeichnet, dass**
die Radialteile (6) vom Grundkörper (5) ausgehend jeweils in radialer Richtung angeordnet sind.

11. Adaptervorrichtung nach mindestens einem der vorangegangenen Ansprüche,
**dadurch gekennzeichnet, dass**
das Zwischenstück (2) aus weicherem Material gebildet ist als das Material der Klauen.

12. Adaptervorrichtung nach mindestens einem der vorangegangenen Ansprüche,
**dadurch gekennzeichnet, dass**
die Flächenpressung in der Mitte der Radialteile 6 bestimmt ist und die Anzahl der jeweils belasteten Radialteile (6) berücksichtigt ist und/oder dass die Radialteile (6) quaderförmig zur Bestimmung genähert sind.

13. Adaptervorrichtung nach mindestens einem der vorangegangenen Ansprüche,
**dadurch gekennzeichnet, dass**
die Anzahl der jeweils belasteten Radialteile (6) drei oder vier ist, wobei die Gesamtzahl der Radialteile 6 oder 8 ist.

14. Adaptervorrichtung nach mindestens einem der vorangegangenen Ansprüche,
**dadurch gekennzeichnet, dass** das Zwischenstück (2) einen Grundkörper (5) und mindestens sechs, sternförmig angeordnete Radialteile (6) aufweist,

15. Adaptervorrichtung nach mindestens einem der vorangegangenen Ansprüche,
**dadurch gekennzeichnet, dass** die Radialteile (6) des Zwischenteils zwischen den Klauen der Adapterwelle (1) und den Klauen des Kupplungsteils angeordnet sind.

16. Adaptervorrichtung nach mindestens einem der vorangegangenen Ansprüche,
**dadurch gekennzeichnet, dass**
die Adapterwelle (1) an ihrem vom Zwischenstück (2) abgewandten Endbereich eine Passfedernut (11) aufweist zur Verbindung mit einem Ritzel eines Getriebes

## Claims

1. An adapter device for connecting a driving shaft, in particular a motor shaft of a motor, in particular an electric motor, to a device to be driven, in particular to a pinion of a gear, comprising
- an adapter shaft (1) for torsion-resistant connection to the device to be driven,
- an intermediate piece (2) which is in engagement with the adapter shaft (1) and
- a sub-component which is in engagement with the intermediate piece (2) and is releasably connectable with form fit to a driving shaft, in particular a motor shaft,
wherein the sub-component comprises a bore for receiving the driving shaft in the sub-component, and wherein the sub-component comprises has at least three claws for forming the coupling,
wherein the adapter shaft (1) has, at its second end, i.e. the end facing the intermediate piece (2), at least three claws for forming a coupling,
and wherein the intermediate piece (2) is provided between the claws of the sub-component and the claws of the adapter shaft,
wherein the intermediate piece (2) has a base body (5) and at least six radial parts (6) arranged in a star shape,
wherein, for connecting a driving shaft, the adapter shaft (1) has a bore, and the diameter of this bore is greater than the diameter of the driving shaft, such that the end of the driving shaft which is on the adapter-shaft side is inserted into the adapter shaft (1) and projects into the adapter shaft (1) without engaging with the adapter shaft (1),
wherein the base body (5) of the intermediate part has a bore and the diameter of this bore is greater than the diameter of the driving shaft, wherein the adapter shaft (1) with its claws is manufactured in one piece and the sub-component comprises a carrier part which has the claws and is manufactured in one piece with these claws, **characterised in that**
the radial parts (6) are convexly designed in the radial direction,
wherein, for form-fitting connection to a driving shaft, the sub-component is an overload coupling which is in engagement with the intermediate piece (2) and is releasably connected with form fit to the driving shaft, in particular by means of a feather key connection.

2. The adapter device according to Claim 1,
**characterised in that**
the claws of the sub-component and the claws of the adapter shaft (1) form a form-fitting connection with clearance after a failure of the intermediate piece (2), in particular resulting from a chemically or mechanically induced breakdown.

3. The adapter device according to at least one of the preceding claims,
**characterised in that**
the sub-component may be designed in different ways for forming different variants of a series, wherein, for form-fitting connection to a driving shaft as a sub-component,
- either a coupling part 3, which is in engagement with the intermediate piece (2) and is releasably connectable with form fit to the driving shaft, in particular by means of a feather key connection,
- or an overload coupling, which is in engagement with the intermediate piece (2) and is releasably connectable with form fit to the driving shaft, in particular by means of a feather key connection,
may be provided.

4. The adapter device according to at least one of the preceding claims,
**characterised in that**
the intermediate piece (2) has a base body (5) and at least six radial parts (6) arranged in a star shape.

5. The adapter device according to at least one of the preceding claims,
**characterised in that**
the sub-component for receiving the driving shaft has a bore and is connectable to the driving shaft by a feather key connection.

6. The adapter device according to at least one of the preceding claims,
**characterised in that**
the radial parts (6) are each arranged in the radial direction starting from the base body (5).

7. The adapter device according to at least one of the preceding claims,
**characterised in that**
the radial parts (6) of the intermediate part are arranged between the claws of the adapter shaft (1) and the claws of the coupling part.

8. The adapter device according to at least one of the preceding claims,
**characterised in that**
the radial parts (6) each have a thickness profile in the radial direction, and the claws or their flanks are shaped and/or curved radially in the circumferential direction, such that, under a nominal load, the radial parts (6) subject the base body (5) of the intermediate part to pressure in the radial direction.

9. The adapter device according to at least one of the preceding claims,
**characterised in that**
the radial parts (6) have spacers (7) in the axial direction with respect to the adapter shaft (1) and the coupling part (3).

10. The adapter device according to at least one of the preceding claims,
**characterised in that**
the radial parts (6) are each arranged in the radial direction starting from the base body (5).

11. The adapter device according to at least one of the preceding claims,
**characterised in that**
the intermediate piece (2) is formed from a softer material than the material of the claws.

12. The adapter device according to at least one of the preceding claims,
**characterised in that**
the surface pressure in the centre of the radial parts (6) is determined and the number of radial parts (6) under load in each case is taken into account and/or in that the radial parts (6) are approximated as cuboidal for the determination.

13. The adapter device according to at least one of the preceding claims,
**characterised in that**
the number of radial parts (6) under load in each case is three or four, wherein the total number of radial parts is 6 or 8.

14. The adapter device according to at least one of the preceding claims,
**characterised in that**
the intermediate piece (2) which has a base body (5) and at least six radial parts (6) arranged in a star shape.

15. The adapter device according to at least one of the preceding claims,
**characterised in that**
the radial parts (6) of the intermediate part are arranged between the claws of the adapter shaft (1) and the claws of the coupling part.

16. The adapter device according to at least one of the preceding claims,
**characterised in that,**
at its end region which is remote from the intermediate piece (2), the adapter shaft (1) has a feather key groove (11) for connection to a pinion of a gear.

## Revendications

1. Dispositif adaptateur pour relier un arbre d'entraînement, en particulier un arbre moteur d'un moteur, en particulier d'un moteur électrique, à un équipement à entraîner, en particulier à un pignon d'une transmission, comprenant
- un arbre adaptateur (1) pour la liaison solidaire en rotation avec l'équipement à entraîner,
- une pièce intermédiaire (2) en prise avec l'arbre adaptateur (1) et
- un sous-composant en prise avec la pièce intermédiaire (2), qui peut être relié de manière amovible par complémentarité de forme à un arbre d'entraînement, en particulier un arbre moteur,
dans lequel le sous-composant comprend un alésage pour le logement de l'arbre d'entraînement dans le sous-composant,
et dans lequel le sous-composant comprend au moins trois griffes pour former l'accouplement,
dans lequel l'arbre adaptateur (1) présente à sa deuxième extrémité, donc à l'extrémité opposée à la pièce intermédiaire (2), au moins trois griffes pour former un accouplement,
et dans lequel la pièce intermédiaire (2) est prévue entre les griffes du sous-composant et les griffes de l'arbre adaptateur,
dans lequel la pièce intermédiaire (2) présente un corps de base (5) et au moins six parties radiales (6) disposées en étoile,
dans lequel, lors de la liaison d'un arbre d'entraînement, l'arbre adaptateur (1) présente un alésage de telle sorte et le diamètre de cet alésage est supérieur au diamètre de l'arbre d'entraînement de telle sorte que l'extrémité côté arbre adaptateur de l'arbre d'entraînement est introduite dans l'arbre adaptateur (1) et pénètre dans l'arbre adaptateur (1) sans être en prise avec l'arbre adaptateur (1),
dans lequel le corps de base (5) de la pièce intermédiaire présente un alésage et le diamètre de cet alésage est supérieur au diamètre de l'arbre d'entraînement,
dans lequel l'arbre adaptateur (1) est réalisé d'une seule pièce avec ses griffes et le sous-composant comprend une partie d'entraînement qui présente les griffes et est réalisé d'une seule pièce avec ces griffes,
**caractérisé en ce**
**que** les parties radiales (6) sont réalisées bombées en direction radiale,
dans lequel, pour la liaison par complémentarité de forme avec un arbre d'entraînement, le sous-composant est un accouplement de surcharge en prise avec la pièce intermédiaire (2), qui est relié de manière amovible par complémentarité de forme à l'arbre d'entraînement, en particulier par clavetage.

2. Dispositif adaptateur selon la revendication 1,
**caractérisé en ce**
**que** les griffes du sous-composant et les griffes de l'arbre adaptateur (1) forment, après une défaillance de la pièce intermédiaire (2), en particulier une défaillance d'origine chimique ou mécanique, une liaison par complémentarité de forme avec jeu.

3. Dispositif adaptateur selon au moins l'une des revendications précédentes,
**caractérisé en ce**
**que** le sous-composant peut être réalisé différemment pour former différentes variantes d'une série,
- soit une partie d'accouplement 3 en prise avec la pièce intermédiaire (2), qui peut être reliée de manière amovible par complémentarité de forme à l'arbre d'entraînement, en particulier par clavetage,
- soit un accouplement de surcharge en prise avec la pièce intermédiaire (2), qui peut être relié de manière amovible par complémentarité de forme à l'arbre d'entraînement, en particulier par clavetage,
pouvant être prévu(e) comme sous-composant pour la liaison par complémentarité de forme avec un arbre d'entraînement.

4. Dispositif adaptateur selon au moins l'une des revendications précédentes,
**caractérisé en ce**
**que** la pièce intermédiaire (2) présente un corps de base (5) et au moins six parties radiales (6) disposées en étoile.

5. Dispositif adaptateur selon au moins l'une des revendications précédentes,
**caractérisé en ce**
**que** le sous-composant présente un alésage pour le logement de l'arbre d'entraînement et peut être relié à l'arbre d'entraînement par clavetage.

6. Dispositif adaptateur selon au moins l'une des revendications précédentes,
**caractérisé en ce**
**que** les parties radiales (6) sont disposées chacune en direction radiale à partir du corps de base (5).

7. Dispositif adaptateur selon au moins l'une des revendications précédentes,
**caractérisé en ce**
**que** les parties radiales (6) de la pièce intermédiaire sont disposées entre les griffes de l'arbre adaptateur (1) et les griffes de la partie d'accouplement.

8. Dispositif adaptateur selon au moins l'une des revendications précédentes,
**caractérisé en ce**
**que** les parties radiales (6) présentent chacune en direction radiale un profil d'épaisseur tel et les griffes ou leurs flancs sont incurvés et/ou formées radialement en direction périphérique de telle sorte que, à la charge nominale, les parties radiales (6) sollicitent en pression le corps de base (5) de la pièce intermédiaire en direction radiale.

9. Dispositif adaptateur selon au moins l'une des revendications précédentes,
**caractérisé en ce**
**que** les parties radiales (6) présentent des écarteurs (7) en direction axiale vers l'arbre adaptateur (1) et vers la partie d'accouplement (3).

10. Dispositif adaptateur selon au moins l'une des revendications précédentes,
**caractérisé en ce**
**que** les parties radiales (6) sont disposées chacune en direction radiale à partir du corps de base (5).

11. Dispositif adaptateur selon au moins l'une des revendications précédentes,
**caractérisé en ce**
**que** la pièce intermédiaire (2) est formée d'un matériau plus tendre que le matériau des griffes.

12. Dispositif adaptateur selon au moins l'une des revendications précédentes,
**caractérisé en ce**
**que** la pression surfacique au milieu des parties radiales 6 est déterminée et le nombre de parties radiales (6) chaque fois sollicitées est pris en considération et/ou que les parties radiales (6) sont approximées par des parallélépipèdes pour la détermination.

13. Dispositif adaptateur selon au moins l'une des revendications précédentes,
**caractérisé en ce**
**que** le nombre de parties radiales (6) chaque fois sollicitées est de trois ou quatre, le nombre total de parties radiales étant de 6 ou 8.

14. Dispositif adaptateur selon au moins l'une des revendications précédentes,
**caractérisé en ce**
**que** le pièce intermédiaire (2) présente un corps de base (5) et au moins six parties radiales (6) disposées en étoile.

15. Dispositif adaptateur selon au moins l'une des revendications précédentes,
**caractérisé en ce**
**que** les parties radiales (6) de la pièce intermédiaire sont disposées entre les griffes de l'arbre adaptateur (1) et les griffes de la partie d'accouplement.

16. Dispositif adaptateur selon au moins l'une des revendications précédentes,
**caractérisé en ce**
**que** l'arbre adaptateur (1) présente à son extrémité opposée à la pièce intermédiaire (2) une rainure de clavette (11) pour la liaison avec un pignon d'une transmission.
